Europäisches Patentamt

European Patent Office

Office européen des brevets

(11) Veröffentlichungsnummer : **0 139 655**
**B1**

# EUROPÄISCHE PATENTSCHRIFT

(45) Veröffentlichungstag der Patentschrift :
15.04.87

(21) Anmeldenummer : 84900273.8

(22) Anmeldetag : 24.12.83

(86) Internationale Anmeldenummer :
PCT/DE 83/00221

(87) Internationale Veröffentlichungsnummer :
WO/8404382 (08.11.84 Gazette 84/26)

(51) Int. Cl.⁴ : **G 01 D 11/28, G 02 F 1/133**

(54) VORRICHTUNG ZUR AUSLEUCHTUNG PASSIVER FLÜSSIGKRISTALLANZEIGEN.

(30) Priorität : 22.04.83 DE 3314631

(43) Veröffentlichungstag der Anmeldung :
08.05.85 Patentblatt 85/19

(45) Bekanntmachung des Hinweises auf die Patenterteilung : 15.04.87 Patentblatt 87/16

(84) Benannte Vertragsstaaten :
CH DE FR GB LI

(56) Entgegenhaltungen :
EP-A- 0 045 831
EP-A- 0 056 843
EP-A- 0 070 322
GB-A- 2 094 996

(73) Patentinhaber : ROBERT BOSCH GMBH
Robert-Bosch-Platz 1
D-7016 Gerlingen-Schillerhöhe (DE)

(72) Erfinder : PETERMANN, Hans
Klintstrasse 6c
D-8500 Nürnberg (DE)
Erfinder : ZIEGLER, Wolfgang
Philipp-Reis-Strasse 52
D-8510 Fürth (DE)

(74) Vertreter : Vetter, Hans, Dr.-Ing.
Robert-Bosch-Platz 1
D-7016 Gerlingen-Schillerhöhe (DE)

Jouve, 18, rue St-Denis, 75001 Paris, France

## Beschreibung

### Stand der Technik

Die Erfindung geht aus von einer Vorrichtung zur Ausleuchtung passiver Flüssigkristallanzeigen nach dem ersten Teil des unabhängigen Anspruchs. Bei einer bekannten Flüssigkristallanzeige für ein Kraftfahrzeug wird das von der internen Beleuchtung auf die LCD-Zelle fallende Licht nur in den angesteuerten Bereichen der Zelle durchgelassen. In den nicht angesteuerten Bereichen wird dagegen das Licht weitgehend absorbiert, so daß die Informationsdarstellung im Negativkontrast erfolgt. Es erscheinen helle Zeichen auf dunklem Hintergrund. Da die beiden dicht übereinanderliegenden Glasplatten der LCD-Zelle mehrere Stützstellen aufweisen und da ferner die auf die Glasplatten aufgedampften Elektroden sich teilweise kreuzen, ist das Erscheinungsbild des dunklen Hintergrundes der Anzeige nicht einheitlich. Werden mehrere an Stegen geführte LCD-Zellen nebeneinander angeordnet, so müssen diese Stege zwischen den einzelnen Displays zur Anpassung an den dunklen Hintergrund entsprechend eingefärbt oder ebenso wie die Stützstellen und Elektrodenkreuzungen durch Farbmasken abgedeckt werden. Solche Farbmasken müssen wegen der unterschiedlichen Transmissionseigenschaften der Materialien in den zu maskierenden Bereichen schwarz, d. h. optisch dicht ausgeführt werden. Da aber andererseits die LCD-Zellen in den optisch gesperrten, nicht angesteuerten Bereichen eine nicht unerhebliche Resttransmission aufweisen, erscheint der Hintergrund in diesen Bereichen abhängig von der Helligkeit der internen Beleuchtung unterschiedlich hell, so daß abhängig davon auch die maskierten Bereiche der LCD-Displays und der Führungsstege unterschiedlich stark hervortreten.

Mit der vorliegenden Lösung wird angestrebt, die maskierten Bereiche an die nicht angesteuerten Bereiche der LCD-Zelle optisch so anzupassen, daß sie unabhängig von der internen Beleuchtung ein homogenes Erscheinungsbild der Flüssigkristallanzeigen abgeben.

### Vorteile der Erfindung

Die erfindungsgemäße Vorrichtung mit den Merkmalen des unabhängigen Anspruchs hat den Vorteil, daß nunmehr in den maskierten Bereichen der Flüssigkristallanzeige eine Auskopplung des internen Lichtes erfolgt, die so groß gewählt wird, wie die Resttransmission in den gesperrten Bereichen der Flüssigkristallanzeige. Dadurch ändert sich die Helligkeit im Bereich der Masken bei unterschiedlicher Beleuchtung in gleicher Weise wie die der gesperrten Bereiche der Flüssigkristallanzeige, so daß die Anzeige für alle Lichtverhältnisse ein homogenes Erscheinungsbild gewährleistet.

Durch die in den abhängigen Ansprüchen aufgeführten Maßnahmen sind vorteilhafte Weiterbildungen und Verbesserungen der im unabhängigen Anspruch angegebenen Merkmale möglich. So ist es zur Vermeidung von Paralaxen vorteilhaft, wenn die das Licht nach vorn auskoppelnden Flächenbereiche des Lichtleiters an der der LCD-Zelle zugewandten Seite des Lichtleiters liegen. In einfachster Weise ist dabei die Oberfläche des Lichtleiters an den lichtauskoppelnden Flächenbereichen aufgerauht.

### Zeichnung

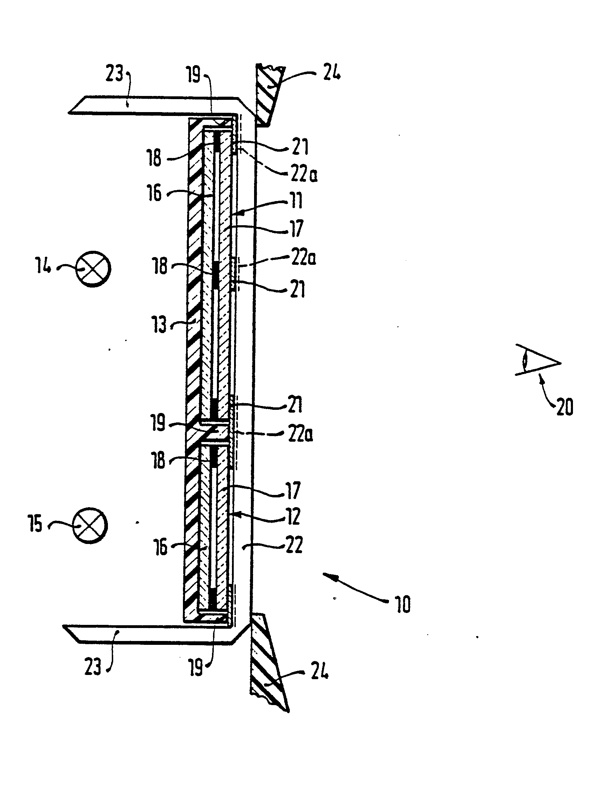

Ein Ausführungsbeispiel der Erfindung ist in der Zeichnung dargestellt und in der nachfolgenden Beschreibung näher erläutert. Die Figur zeigt eine Flüssigkristallanzeige mit einem erfindungsgemäß gestalteten Lichtleiter im Querschnitt.

### Beschreibung des Ausführungsbeispieles

Die Figur zeigt eine mit 10 bezeichnete Flüssigkristallanzeige im Cockpit eines Kraftfahrzeuges, die aus zwei nebeneinander angeordneten LCD-Zellen 11 und 12 besteht. Die LCD-Zellen 11 und 12 sind in einem durchsichtigen Kunststoffrahmen 13 eingesetzt, hinter dem zwei Lichtquellen in Form von Glühlampen 14 und 15 angebracht sind. Die Flüssigkristallsubstanz der LCD-Zellen 11 und 12 befindet sich jeweils zwischen zwei Glasplatten 16 und 17, die durch Stützstellen 18 den gewünschten Abstand voneinander haben. Für die einzelnen Anzeigeelemente der LCD-Zellen 11 und 12 sind jeweils auf der Innenseite der Glasplatte 16 und 17 Elektroden aufgedampft, die über Leiterbahnen an zwei gegenüberliegenden Seiten der LCD-Zellen 11 und 12 nicht erkennbar kontaktiert sind. Die LCD-Zellen 11 und 12 sind an Stegen 19 des Kunststoffrahmens 13 seitlich geführt. Die Stege 19 schließen vorne in einer Ebene zu den LCD-Zellen 11 und 12 ab. Die Flüssigkristallanzeige 10 ist mit einem Negativkontrast von vorne ablesbar, wobei der Betrachter durch ein Auge 20 symbolisch dargestellt ist. Bei einer elektrischen Ansteuerung der LCD-Zellen 11 und 12 erscheinen dabei helle Anzeigeelemente auf dunklem Hintergrund. An der Frontseite der Flüssigkristallanzeige 10 sind im Bereich der im Bild nicht erkennbaren Elektrodenkreuzungen, der Stützstellen 18 und der Stege 19 schwarze Maskierungen 21 aufgetragen, die optisch dicht sind und folglich kein Licht durchlassen. Durch diese Maskierungen soll ein einheitliches Erscheinungsbild der Flüssigkristallanzeige 10 auf ihrer Frontseite erreicht werden. Das auf die Flüssigkristallanzeige 10 fallende Licht der internen Beleuchtung 14, 15, das sich bei einer Beleuchtungsregelung je nach den Lichtverhältnissen im Fahrzeug bzw. in der Umgebung ändert, wird in den gesperrten Bereichen der LCD nicht vollständig absorbiert. Da solche Resttransmissionen an den Maskierungen 21 jedoch nicht auftreten, erhält man durch die Masken einen unterschiedlich dunklen Hintergrund an der Frontseite der Flüssigkristallanzeige 10.

Um diese Unterschiede auszugleichen, wird an der Frontseite der Flüssigkristallanzeige 10 im Bereich der Maskierungen 21 zusätzliches Licht nach vorn ausgekoppelt, so daß auch im Bereich der Maskierungen 21 eine Aufhellung des Hintergrundes erfolgt. Zu diesem Zweck ist vor der gesamten Flüssigkristallanzeige 10 ein Lichtleiter 22 aus einem durchsichtigen Kunststoff angeordnet, der plattenförmig ausgebildet ist. Der Lichtleiter 22 hat an seinem äußeren Rand an zwei gegenüberliegenden Seiten jeweils einen Fortsatz 23, der seitlich über die Flüssigkristallanzeige 10 hinaus nach hinten vorsteht. Über diese Fortsätze 23 ragt der Lichtleiter 22 soweit um die Flüssigkristallanzeige 10 herum, daß dort von den hinter der Flüssigkristallanzeige 10 befindlichen Glühlampen 14 und 15 ein Teil des Lichtes in den Lichtleiter 22 eintreten kann. Im Bereich der Maskierungen 21 ist der Lichtleiter 22 mit Flächenbereichen 22a versehen, die ein Teil des in den Lichtleiter 22 eingekoppelten Lichtes nach vorn auskoppeln. Diese Flächenbereiche 22a liegen an der der Flüssigkristallanzeige 10 zugewandten Seite des Lichtleiters 22. Die Auskopplung des Lichtes erfolgt dadurch, daß die Oberfläche des Lichtleiters 22 an diesen Flächenbereichen 22a aufgerauht ist. Die Flüssigkristallanzeige 10 ist zusammen mit dem Lichtleiter 22 in einer Öffnung eines Cockpitgehäuses 24 eingesetzt, wobei die Randbereiche des Lichtleiters 22 vom Cockpitgehäuse 24 abgedeckt sind. Da der Lichtleiter 22 über zwei nebeneinander angeordnete, in den Stegen 19 geführte LCD-Zellen 11 und 12 hinwegragt, befinden sich sowohl im Bereich der Stützstellen 18 als auch im Bereich der Stege 19 und der nicht erkennbaren Elektrodenkreuzungen lichtauskoppelnde Flächenbereiche 22a.

Der Lichtleiter 22 ist mit einem kleinen Luftspalt unmittelbar vor den LCD-Zellen 11 und 12 und den Masken 21 angeordnet, so daß das an den Fortsätzen 23 eingekoppelte Licht sich gleichmäßig über den Lichtleiter 22 verteilt. Durch die lichtauskoppelnden Flächenbereiche 22a des Lichtleiters 22 erscheinen nunmehr die Maskierungen 21 im gleichen Maße aufgehellt, so daß sich ein homogenes Erscheinungsbild auf der Frontseite der Flüssigkristallanzeige 10 ergibt. Wird nun der dunkle Hintergrund der LCD-Zellen 11 und 12 durch sich ändernde Beleuchtungsverhältnisse von der Beleuchtungsregelung weiter aufgehellt, so erfolgt dies auch in gleichem Umfang durch die lichtauskoppelnden Flächenbereiche 22a des Lichtleiters 22 im Bereich der Maskierungen 21. Dadurch ist gewährleistet, daß unabhängig von den Lichtverhältnissen an der Flüssigkristallanzeige 10 ein homogenes Erscheinungsbild der Anzeige im Negativkontrast erzeugt wird.

Für die Maskierungen 21 wird zweckmäßigerweise eine durchgehende, im Bereich des Sichtbereiches der LCD's ausgestanzte schwarze Folie verwendet.

Durch mehr oder weniger starkes Aufrauhen der Flächenbereiche 22a kann der auszukoppelnde Lichtanteil auf die Resttransmission der LCD-Zellen 11 und 12 angepaßt werden. Anstelle einer Aufrauhung ist es auch möglich, an den Flächenbereichen 22a auf der Oberfläche des Lichtleiters 22 einen farblosen Mattlack aufzutragen. In beiden Fällen verschwinden bei geeigneter Abstimmung der lichtauskoppelnden Flächenbereiche 22a des Lichtleiters 22 mit der Resttransmission der LCD-Zellen 11 und 12 die Maskierungen 21 im Erscheinungsbild der Flüssigkristallanzeige 10.

**Patentansprüche**

1. Vorrichtung zur Ausleuchtung passiver Flüssigkristallanzeigen mit mindestens einer Lichtquelle (14, 15) hinter der Flüssigkristallanzeige, die aus zwei durch Stützstellen (18) mit geringem Abstand übereinanderliegenden, transparente Elektroden tragenden Substratplatten mit einer dazwischenliegenden Flüssigkristallsubstanz besteht, wobei an der Flüssigkristallanzeige ein Bild im Negativkontrast mit hellen Anzeigeelementen auf dunklem Hintergrund erscheint und die Flüssigkristallanzeige im Bereich der im Bild nicht erkennbaren Elektrodenkreuzungen und der Stützstellen (18) auf ihrer Frontseite Maskierungen (21) aufweist, dadurch gekennzeichnet, daß mit geringem Abstand vor der Frontplatte (17) der gesamten Flüssigkristallanzeige (10) ein plattenförmiger, zum Teil seitlich über die Flüssigkristallanzeige hinaus vorstehender Lichtleiter (22) angeordnet ist, in den außerhalb der Flüssigkristallanzeige (10) Licht eintritt und der im Bereich der Maskierungen (21) Flächenbereiche (22a) aufweist, die einen Teil des Lichtes nach vorn auskoppeln.

2. Vorrichtung nach Anspruch 1, dadurch gekennzeichnet, daß die das Licht auskoppelnden Flächenbereiche (22a) an der der Flüssigkristallanzeige (10) zugewandten Seite des Lichtleiters (22) liegen.

3. Vorrichtung nach Anspruch 1 oder 2, dadurch gekennzeichnet, daß die Oberfläche des Lichtleiters (22) an den Flächenbereichen (22a) aufgerauht ist.

4. Vorrichtung nach Anspruch 1 oder 2, dadurch gekennzeichnet, daß an den Flächenbereichen (22a) des Lichtleiters (22) ein farbloser Mattlack aufgetragen ist.

5. Vorrichtung nach einem der vorherigen Ansprüche, dadurch gekennzeichnet, daß der Lichtleiter (22) über mehrere nebeneinander angeordnete, an Stegen (19) geführte LCD-Zellen (11, 12) hinwegragt und im Bereich der Stege (19) weitere lichtauskoppelnde Flächenbereiche (22a) aufweist.

6. Vorrichtung nach einem der vorherigen Ansprüche, dadurch gekennzeichnet, daß der Lichtleiter (22) mit mindestens einem Randbereich (23) soweit um die Flüssigkristallanzeige (10) herumragt, daß von der Lichtquelle (14, 15) hinter der Flüssigkristallanzeige (10) ein Teil des Lichtes in den Lichtleiter (22) eintritt.

7. Vorrichtung nach Anspruch 6, dadurch gekennzeichnet, daß der Lichtleiter (22) an zwei gegenüberliegenden Seiten jeweils mit einem als Fortsatz (23) ausgebildeten Randbereich seitlich über die Flüssigkristallanzeige (10) hinaus nach hinten vorsteht.

## Claims

1. Device for the stimulation of passive liquid crystal displays having at least one light source (14, 15) behind the liquid crystal display, which consists of two substrate plates, disposed one above the other by means of supporting positions (18) with a small spacing and carrying transparent electrodes, with a liquid crystal substance disposed therebetween, wherein an image appears at the liquid crystal display in negative contrast with bright display elements on a dark background and the liquid crystal display exhibits maskings (21) in the region of the electrode intersections, which are not recognizable in the image, and of the supporting positions (18) on its front side, characterized in that with a small spacing in front of the front plate (17) of the entire liquid crystal display (10) a plate-shaped light guide (22), which partially projects laterally beyond the liquid crystal display, is disposed, into which light enters outside the liquid crystal display (10) and which in the region of the maskings (21) exhibits surface regions (22a) which couple out a part of the light in a forward direction.

2. Device according to Claim 1, characterized in that the surface regions (22a) coupling out the light are disposed at the side of the light guide (22) facing the liquid crystal display (10).

3. Device according to Claim 1 or 2, characterized in that the surface of the light guide (22) is roughened at the surface regions (22a).

4. Device according to Claim 1 or 2, characterized in that a colourless matt varnish is applied at the surface regions (22a) of the light guide (22).

5. Device according to one of the preceding claims, characterized in that the light guide (22) projects beyond a plurality of LCD cells (11, 12), which are disposed side by side and which are guided at webs (19), and exhibits further surface regions (22a) which are disposed in the region of the webs (19) and which couple out light.

6. Device according to one of the preceding claims, characterized in that the light guide (22) projects, by at least one edge region (23), around the liquid crystal display (10) to such an extent that from the light source (14, 15) behind the liquid crystal display (10) a part of the light enters the light guide (22).

7. Device according to Claim 6, characterized in that the light guide (22) projects rearwardly, laterally beyond the liquid crystal display (10), at two opposite side by respective edge regions designed as continuations (23).

## Revendications

1. Installation pour l'éclairage d'affichages passifs à cristaux liquides avec au moins une source de lumière (14, 15) placée derrière l'affichage à cristaux liquides constitué de deux plaques de substrat transparentes portant des électrodes et maintenues à un faible intervalle l'une de l'autre par des points d'appui (18), avec une substance de cristaux liquides placée entre elles, une image en contraste négatif avec des éléments d'affichage clairs sur un arrière plan sombre apparaissant sur l'affichage à cristaux liquides, et cet affichage à cristaux liquides comportant, sur sa face frontale, dans les zones des croisements d'électrodes et des points d'appui (18), des masquages (21), installation caractérisée en ce qu'un conducteur de lumière (22), en forme de plaque, faisant partie en saillie latéralement vers l'extérieur au-delà de l'affichage à cristaux liquides, est disposé à un faible intervalle en avant de la plaque frontale (17) de l'ensemble de l'affichage à cristaux liquides (10), conducteur de lumière dans lequel la lumière pénètre en dehors de l'affichage à cristaux liquides (10), et qui comporte, dans les zones des masquages (21), des zones superficielles (22a) qui découplent vers l'avant une partie de cette lumière.

2. Installation selon la revendication 1, caractérisée en ce que les zones superficielles (22a) découplant la lumière, se situent sur la face du conducteur de lumière (22) tournée vers l'affichage à cristaux liquides (10).

3. Installation selon la revendication 1 ou 2, caractérisée en ce que la surface du conducteur de lumière (22) est rendue rugueuse sur les zones superficielles (22a).

4. Installation selon la revendication 1 ou 2, caractérisée en ce qu'un vernis mat incolore est appliqué sur les zones superficielles (22a) du conducteur de lumière (22).

5. Installation selon une des précédentes revendications, caractérisée en ce que le conducteur de lumière (22) s'étend sur plusieurs cellules LCD (11, 12) disposées l'une à côté de l'autre et guidées contre des nervures (19), et qu'il comporte, au voisinage de ces nervures (19), d'autres zones superficielles (22a) découplant la lumière.

6. Installation selon une des précédentes revendications, caractérisée en ce que le conducteur de lumière (22) s'étend avec au moins une zone de bordure (23) dans une mesure telle autour de l'affichage à cristaux liquides (10), qu'une partie de la lumière en provenance de la source de lumière (14, 15) placée derrière l'affichage à cristaux liquides (10), pénètre dans le conducteur de lumière (22).

7. Installation selon la revendication 6, caractérisée en ce que le conducteur de lumière (22) fait saillie vers l'arrière au-delà de l'affichage à cristaux liquides (10) respectivement sur deux côtés opposés avec une zone de bordure en forme de prolongement (23).